# DEMANDE DE BREVET EUROPEEN

(11) **EP 0 578 070 A1**
(43) Date de publication de la demande: **12.01.1994**
(21) Numéro de dépôt: 93110140.6
(22) Date de dépôt: 24.06.1993
(51) Int. Cl.: H04N 1/32

(54) **Appareil de télécommunication tel qu'un télécopieur**

(30) Priorité: 30.06.1992 FR 9208140
(71) Demandeur: SWATCH AG, CH-2500 Biel (CH)
(72) Inventeur: Schlesinger, Benjamin, CH-2560 Nidau (CH)
(74) Mandataire: Thérond, Gérard Raymond

(57) **Abrégé**

L'appareil de communication (1) est connecté à une ligne de télécommunication (12) et détecte si un téléphone (11) connecté en parallèle est décroché. Dans ce cas l'appareil (1) détecte si un signal d'appel de télécopie est présent sur ladite ligne (12) ou si celle-ci est silencieuse pendant un certain temps, pour indiquer s'il se produit sur la ligne (12) un envoi/réception d'un signal d'image. L'appareil (1) peut donc substituer en priorité la réception/transmission du signal d'image sur la ligne (12) à un appel téléphonique (2) qui est présent sur cette même ligne (12), même si le téléphone (11) qui est connecté en parallèle avec cet appareil (1) est en activité.

## Description

La présente invention est relative à un appareil de télécommunication tel qu'un dispositif télécopieur, et elle concerne plus particulièrement les appareils de télécommunication comprenant un dispositif automatique de télécommunication sensible à des signaux de parole ou des signaux d'image reçus par l'intermédiaire d'une ligne de télécommunication.

La présente invention peut être appliquée dans des appareils de télécommunication composites comprenant un dispositif télécopieur, un dispositif téléphonique et un dispositif répondeur automatique, l'invention étant décrite ci-après en relation à cette application à titre d'exemple. Cependant, on comprendra que l'invention n'est pas limitée à cette application.

On connait déjà des appareils de télécommunication comprenant un dispositif télécopieur raccordé à une ligne téléphonique en même temps qu'un dispositif téléphonique. Ces dispositifs sont branchés alternativement à la ligne téléphonique pour qu'ils puissent respectivement réaliser les fonctions auxquelles ils sont destinés. Dans certains de ces appareils, il est nécessaire de déconnecter tout d'abord la ligne téléphonique du dispositif téléphonique qui y est raccordé afin que le dispositif télécopieur puisse être raccordé à cette ligne téléphonique et recevoir ou émettre des messages de télécopies. Lorsqu'un utilisateur de ce type d'appareil de télécommunication répond à un appel téléphonique en décrochant le combiné du dispositif téléphonique, celui-ci est raccordé à la ligne téléphonique et le correspondant et l'utilisateur peuvent alors parler ensemble. Si ensuite, l'utilisateur souhaite recevoir un message de télécopie sur la même ligne téléphonique, il doit d'abord raccrocher le combiné pour débrancher le dispositif téléphonique de la ligne. Ensuite, l'appareil de télécommunication doit être commandé de telle façon que l'appareil de télécopie puisse être raccordé à la ligne téléphonique et lorsqu'alors un signal d'appel est reçu par l'appareil de télécommunication, l'appareil de télécopie est connecté à la ligne téléphonique et peut alors recevoir un message de télécopie provenant de l'utilisateur.

Dans d'autres appareils de télécommunication, on utilise un signal qui identifie le type de message devant être transmis du correspondant à l'utilisateur. La présence ou l'absence d'un signal d'appel de télécopie ou signal dit CNG, est utilisé pour indiquer que le message qui suivra sera un message de télécopie ou un message parlé. Ainsi, lorsqu'un signal CNG est détecté dans le signal d'appel reçu par l'appareil de télécommunication, l'appareil de télécopie est automatiquement branché à la ligne téléphonique. L'appareil de télécommunication est alors connecté à la ligne et un message de télécopie est reçu. De façon similaire, au cours d'une conversation téléphonique entre un correspondant et l'utilisateur d'un tel appareil de télécommunication, le correspondant peut provoquer l'émission d'un signal CNG vers l'utilisateur de sorte que lorsque ce signal CNG est détecté, l'appareil de télécommunication de l'utilisateur provoque le branchement de l'appareil de télécopie à la ligne téléphonique pour permettre la réception de message de télécopie sans que l'appareil de télécommunication ait à être déconnecté de la ligne téléphonique.

On apprécie largement aujourd'hui la commodité des appareils de télécommunication comprenant un dispositif télécopieur et on en trouve de plus en plus en pratique tant pour l'utilisation personnelle que pour l'utilisation commerciale. La plupart des lieux d'utilisation ne sont munis que d'une seule ligne téléphonique à laquelle sont couplés un ou plusieurs dispositifs téléphoniques. Cependant, les appareils de télécommunication existant ont été conçus pour être utilisés avec une ligne téléphonique particulière. Par exemple, lorsqu'un utilisateur reçoit un appel en utilisant un dispositif téléphonique distinct couplé à la même ligne qu'un appareil de télécommunication existant, seul le dispositif téléphonique distinct est connecté à la ligne. Pour pouvoir émettre ou recevoir un message de télécopie utilisant un appareil de télécommunication, l'utilisateur doit nécessairement d'abord raccrocher et rompre la connexion entre la ligne et le dispositif téléphonique distinct puis le correspondant doit de nouveau composer le numéro de l'utilisateur pour l'appareil de télécommunication puisse répondre au signal d'appel et brancher le dispositif de télécopie de l'appareil de télécommunication à la ligne.

L'invention a pour but de fournir un appareil de télécommunication qui remédie aux inconvénients des appareils de communication connus.

L'invention a donc pour objet un appareil de télécommunication destiné à être utilisé avec un poste téléphonique pouvant être relié à une ligne de télécommunication, cet appareil comprenant des moyens de télécommunication destinés à recevoir et à émettre un signal d'image transmis sur la ligne de télécommunication, des moyens de détection d'appel connectés entre ladite ligne de télécommunication et lesdits moyens de télécommunication pour détecter un signal d'appel transmis sur la ligne de télécommunication, un commutateur destiné à connecter ledit appareil de télécommunication à ladite ligne de télécommunication pour permettre l'établissement d'une liaison entre ces moyens et cette ligne, des moyens d'identification de signal destiné à détecter un élément d'identification du signal d'image transmis sur la ligne de télécommunication, ledit élément précédant le signal d'image, et des moyens de commande destinés à permettre la réception du signal d'image par les moyens de télécommunication à la suite de la détection de l'élément d'identification du signal d'image, l'appareil de télécommunication étant caractérisé en ce qu'il comprend en outre des moyens pour détecter la mise en télécommunication du poste téléphonique et de la ligne de télécommunication à la suite de la réception du signal d'appel, de telle façon que lorsque cette mise en télécommunication est détectée, le commutateur de connexion est actionné de telle façon que les moyens d'identification de signal puisse surveiller la ligne de télécommunication pour détecter l'apparition d'un élément d'identification de signal d'image sans déconnecter le poste téléphonique de la ligne de télécommunication.

Lorsque, grâce à ces caractéristiques, un utilisateur répond à un appel entrant sur un poste téléphonique qui est séparé de l'appareil de télécommunication de la présente invention, et que le poste téléphonique séparé est connecté à la ligne téléphonique, l'appareil de télécommunication est adapté pour également être connecté à la ligne téléphonique. Si un signal identifiant un message de télécopie est détecté, celui-ci peut être reçu par l'appareil de télécommunication sans que tout d'abord le poste téléphonique séparé doit être déconnecté de la ligne téléphonique.

La description qui va suivre se réfère plus en détail aux différentes caractéristiques du dispositif de télécommunication de la présente invention. Pour faciliter la compréhension de l'invention, on fait référence dans la description aux dessins annexés dans lesquels l'appareil de télécommunication est illustré sous la forme d'un mode de réalisation préféré. On doit comprendre, toutefois, que l'appareil de télécommunication de la présente invention n'est pas limité à ce mode de réalisation tel qu'il est illustré dans les dessins.

Aux dessins annexés :
La figure 1 est une schéma simplifié d'un mode de réalisation de l'appareil de télécommunication suivant la présente invention; et
Les figures 2 à 4 sont des organigrammes destinés à expliquer le fonctionnement de l'appareil de télécommunication représenté à la figure 1.

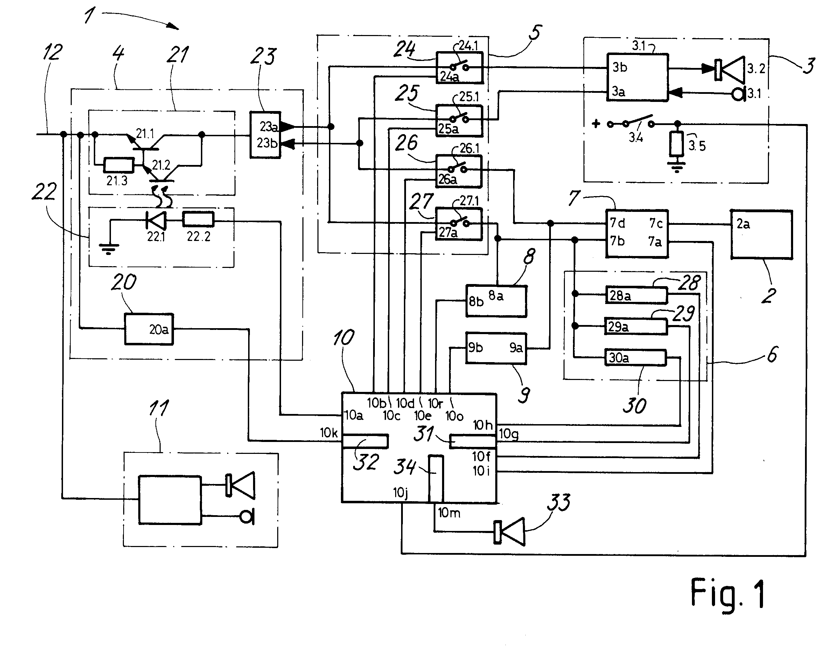

En se référant à la figure 1 des dessins, il a été représenté un schéma simplifié d'un dispositif de communication 1 réalisé selon la présente invention. Les blocs fonctionnels représentant des circuits tel que le générateur d'impulsions de sélection, nécessaire pour provoquer un appel, ainsi que ceux associés au dispositif télécopieur autres que le circuit de commande de télécopieur, ont été omis pour ne pas compliquer le dessin. L'appareil de télécommunication 1 comprend un dispositif de télécopie 2, un poste téléphonique 3, un circuit 4 d'interface de ligne téléphonique, un circuit de commutation 5, un circuit 6 de détection de signal, un dispositif 7 de commande de télécopieur, un circuit 8 d'enregistrement de messages vocaux, un générateur 9 de messages vocaux et un dispositif de télécommande 10. Un poste téléphonique 11 distinct comprenant un combiné et une base ordinaires et couplé à une ligne téléphonique 12 comme l'est l'appareil de télécommunication 1. La relation entre cet appareil et le poste téléphonique 1 distinct sera expliquée ci-après.

Le circuit 4 d'interface de ligne téléphonique comprend un circuit 20 de détection d'appels connecté à la ligne téléphonique 12. Une sortie 20a du circuit 20 de détection d'appels est destinée à appliquer à l'entrée 10k du dispositif de télécommande 10 un signal représentant la présente d'un signal d'appel sur la ligne téléphonique 12. A titre d'exemple, un signal d'appel peut avoir une fréquence de 16 Hz et être engendré par un central téléphonique (non représenté) en état d'attente, mais il est entendu que, comme la fréquence et la nature de tels signaux d'appels varient d'une région à l'autre, les caractéristiques du détecteur d'appels 20 peuvent être adaptées aux conditions locales. Le dispositif de commande 10 comprend un compteur 32 pour surveiller la période pendant laquelle l'entrée 10k indique la présence d'un signal d'appel sur la ligne téléphonique 12.

Le circuit 4 d'interface de ligne téléphonique comprend également un circuit 21 de commutation de connexions, un circuit 20 de commande de commutation et un dispositif 23 d'isolation. Le circuit 21 de commutation de connexions comprend un transistor de commutation 21.1 dont le collecteur est connecté au dispositif 23 d'isolation et dont l'émetteur est relié à la ligne téléphonique 12. Un phototransistor 21.2 au silicium est également prévu, son émetteur étant connecté à la base du transistor de commutation 21.1, tandis que son collecteur est relié au collecteur du transistor de commutation 21.1. Une résistance de polarisation 21.3 est également reliée entre les émetteurs des transistors 21.1 et 21.2. Le circuit 22 de commande de commutation comprend une diode électroluminescente 22.1 à infrarouge destinée à assurer le couplage avec le phototransistor 21.2. Le transistor de commutation 21.1 est normalement à l'état non conducteur pour empêcher une télécommunication entre l'appareil de télécommunication 1 et la ligne téléphonique 12. Lorsque la diode 22.1 transmet de la lumière vers le phototransistor 21.2, ce qui à son tour provoque la conduction du transistor 21.1 pour connecter l'appareil de télécommunication 1 à la ligne téléphonique 12, une télécommunication est établie entre cet appareil et la ligne 12 de sorte que des signaux de télécommunication tels que des signaux vocaux ou des signaux d'image peuvent être reçus et émis par l'appareil de télécommunication 1.

La diode 22.1 commande ainsi l'état conducteur ou non-conducteur du transistor de commutation 21.1, l'une de ses bornes étant connectée à la sortie 10a du dispositif de commande 10 par l'intermédiaire d'une résistance 22.2, son autre borne étant reliée à la masse. Lorsque la sortie 10a est portée au niveau élevé, de la lumière est émise par la diode 22.1 vers le phototransistor 21.2 de manière à rendre conducteur le transistor de commutation 21.1; lorsque la sortie 10a passe au niveau faible, le transistor de commutation 21.1 cesse de conduire de sorte que l'appareil de télécommunication 1 est déconnecté de la ligne téléphonique 12.

Le circuit d'isolation 23 est connecté entre le commutateur de connexion 21 et le circuit de commutation 5 pour assurer une isolation électrique entre l'appareil de télécommunication 1 et la ligne téléphonique 12. Le combiné téléphonique 3, le dispositif télécopieur 2 et d'autres circuits de détection, de commande et de message de l'appareil de télécommunication 1 sont ainsi munis d'une protection contre les surtensions et les brusques augmentations de puissance qui peuvent apparaître dans la ligne téléphonique 12. Le circuit 23 d'isolation de ligne peut comprendre des dispositifs optocoupleurs, des bobines de transformation et d'autres dispositifs connus d'isolation électrique. Le poste téléphonique 3 comprend un circuit de télécommunication 3.1, un combiné avec un émetteur 3.2 et un récepteur 3.3 et un interrupteur de combiné 3.4. Lorsqu'un utilisateur de l'appareil de communication parle dans le récepteur 3.3, des signaux vocaux sont envoyés vers le circuit de télécommunication 3.1 qui amplifie le signal vocal. Une sortie 3a assure la transmission de ces signaux vocaux amplifiés vers un correspondant, par l'intermédiaire de la ligne téléphonique 12. Les signaux ainsi reçus sont amplifiés par le circuit de télécommunication 3.1 et envoyés vers le haut-parleur 3.2 pour qu'ils puissent être perçus par l'utilisateur de l'appareil de télécommunication 1.

L'une des bornes de l'interrupteur de combiné 3.4 du poste téléphonique 3 est reliée à la borne positive d'une source d'alimentation, son autre borne étant reliée à une entrée 10j du dispositif de commande 10. Un résistance 3.4 est également prévue entre cette autre borne de l'interrupteur de combiné 3.4 et la masse. Lorsque le combiné de poste téléphonique comprenant le récepteur 3.3 et le haut-parleur 3.2 est soulevé de son support, l'interrupteur de combiné est fermé et un signal de niveau logique élevé est appliqué à l'entrée 10j.

Le dispositif télécopieur 2 de l'appareil de télécommunication 1 est bien connu et ne sera pas décrit ici en détail, il suffit de savoir qu'il est capable de recevoir, d'imprimer et d'émettre des signaux d'image par l'intermédiaire de la ligne téléphonique 12. Le dispositif 7 de commande de télécopieur commande le fonctionnement du dispositif télécopieur 20 en fonction d'une instruction de démarrage de télécopieur reçue à l'entrée/sortie 7a qui est reliée à une entrée/sortie 10i du dispositif de commande 10. Lorsqu'un télécommunication de télécopieur est achevée par le dispositif télécopieur 2, un signal de fin de télécommunication de télécopie est également envoyé par l'entrée/sortie 7a vers le dispositif de commande 10. Celui-ci reçoit les signaux d'image d'une entrée 7b émis par un correspondant sur la ligne téléphonique 12, ces signaux pouvant être démodulés et envoyés de l'entrée/sortie 7c vers une entrée/sortie 2a du dispositif télécopieur 2. De même, des signaux d'image émis par l'entrée/sortie 2a du dispositif télécopieur 2, sont amplifiés et modulés par le dispositif 7 de commande de télécopie pour être émis à partir de la sortie 7d.

Le circuit de commutation 5 est construit pour permettre de commuter le dispositif télécopieur 2 et/ou en même temps le poste téléphonique 3 à la ligne téléphonique 12 par l'intermédiaire du circuit 4 d'interface téléphonique. Le circuit de commutation 5 comprend quatre éléments de commutation 24, 25, 26 et 27. Les éléments de commutation 24 et 27 permettent la réception par le poste téléphonique 3 et le dispositif télécopieur 2 respectivement de signaux de télécommunication provenant de la ligne téléphonique 12, tandis que les éléments de commutation 25 et 26 permettent l'émission par le poste téléphonique 3 et le dispositif télécopieur 2 respectivement de signaux de télécommunication sur la ligne téléphonique 12. L'élément de commutation 24 comprend un contact 24.1 dont l'une des bornes est connectée à l'entrée 3a du poste téléphonique 3, l'autre borne de ce contact étant connectée à l'entrée 23a du circuit d'isolation 23 du circuit 4 d'interface de ligne téléphonique. L'élément de commutation 25 comprend un contact 25.1 dont l'une des bornes est reliée à la sortie 3a du poste téléphonique 3, tandis que son autre borne est connectée à l'entrée 23b du circuit d'isolation 23.

De même, l'élément de commutation 26 comprend un contact 26.1 dont l'une des bornes est reliée à la sortie 7d du dispositif 7 de commande de télécopieur, tandis que l'autre borne est reliée ensemble avec l'autre borne du contact 25.1, à la sortie 23b du circuit d'isolation 23. L'élément de commutation 27 comprend un contact 27.1 dont l'une des bornes est reliée à l'entrée 7b du dispositif de commande de télécopieur, tandis que l'autre borne est reliée, ensemble avec l'autre borne du contact 24.1 à la sortie 23a du circuit d'isolation 23.

De plus, les éléments de commutation 24, 25, 26 et 27 sont respectivement munis d'entrées 24a, 25a, 26a et 27a afin de recevoir des signaux de commande de sorties 10b, 10c, 10d et 10e du dispositif de commande 10. Ces signaux de commande permettent aux contacts 24.1, 25.1, 26.1 et 27.1, d'assumer soit une position ouverte soit une position fermée. Les éléments de commutation 24, 25, 26 et 27 peuvent être réalisés sous forme de dispositifs analogiques en utilisant des bobines d'excitation pour commander la position d'un contact, des dispositifs numériques dans lesquels des signaux de commande sont appliqués à la base de transistors de commutation, d'autres dispositifs appropriés pouvant être utilisés comme l'apprécieront les spécialistes dans la présente technique.

Le circuit 6 de détection de signal comprend un détecteur 28 de signal d'appel de télécopie, un détecteur 29 de silence et un détecteur 30 d'occupation, les entrées respectives 28a, 29a et 30a de ces éléments étant respectivement reliés à l'entrée 7b du dispositif 7 de commande de télécopieur. Le détecteur 28 détecte le signal d'appel de télécopie émis par un correspondant après le détection d'un signal d'appel et permet au dispositif télécopieur 2 et au dispositif de commande 7 d'être commutés sur la ligne téléphonique 12 par le circuit de commutation 5. Lorsqu'un signal d'appel de télécopie est détecté, le détecteur 28 envoie un signal de détection de signal d'appel de télécopie de la sortie 28b vers une entrée 10f du dispositif de commande 10 qui, ensuite, commande le fonctionnement du circuit de commutation 5. Bien que ce mode de réalisation particulier de l'appareil de télécommunication soit adapté pour détecter des signaux d'appel de télécopie et pour répondre à ces signaux, on comprendra que d'autres signaux distinguant un signal d'image d'un signal vocal peuvent être utilisés et que le détecteur 28 doit être adapté pour détecter ces autres signaux et fournir une sortie lorsqu'ils apparaissent.

Le détecteur de silence 29 détecte l'absence de signaux vocaux ou d'images sur la ligne téléphonique 12 pour permettre à l'appareil de télécommunication de détecter automatiquement l'émission d'un message d'images provenant d'un correspondant utilisant un poste de télécopie commandé à la main, c'est-à-dire dans le cas où un signal tel qu'un signal d'appel de télécopie n'est pas émis avant la transmission d'un message de télécopie. Si ni un signal vocal ni un signal d'image est détecté par le détecteur de silence 29, une sortie 29b de ce détecteur fournit un signal représentant cette situation et l'envoie à une entrée 10g du dispositif de commande 10. Ce dernier comporte un compteur 31 qui lui permet de surveiller la période pendant laquelle le détecteur de silence 30 indique qu'il n'y a pas de signal vocal ou d'image sur la ligne téléphonique 12. Lorsque cette période dépasse un temps prédéterminé t₂ mémorisé, ce temps pouvant être égal à 6 secondes ou davantage, le dispositif de commande 10 est adapté pour permettre la réception d'un message d'image par le dispositif 7 de commande de télécopie et le dispositif télécopieur 2.

Le détecteur d'occupation 30 détecte un signal répétitif à fréquence vocale provenant d'un central téléphonique lorsque, après l'établissement d'une télécommunication entre un poste téléphonique ou un dispositif télécopieur d'un correspondant éloigné et l'appareil de télécommunication 1a, le correspondant éloigné déconnecte son téléphone ou son dispositif télécopieur de la ligne téléphonique 12. Une sortie 30b fournit un signal qui indique qu'un signal d'occupation a été détecté, ce signal étant envoyé à une entrée 10h du dispositif de commande 10. Le détecteur d'occupation 30 peut être adapté pour détecter d'autres signaux indiquant une rupture de télécommunication en fonction du type de signal envoyé par le central téléphonique vers l'appareil de communication 1, comme le comprendront les spécialistes dans la présente technique.

L'appareil de télécommunication 1 comprend en outre un dispositif 33 d'avis d'appel, commandé par une sortie 10m du dispositif de commande 10, ce dispositif d'avis d'appel 33 pouvant être conçu pour annoncer la détection d'un signal d'appel sur la ligne téléphonique 12 à un utilisateur de l'appareil de télécommunication 1. Le dispositif d'avis 33 peut comprendre de façon classique une sonnerie, un vibreur acoustique ou un autre dispositif similaire capable de produire une indication caractéristique acoustique ou visuelle en réponse à un signal d'avis d'appel provenant de la sortie 10m. Le dispositif de commande 10 comprend également un compteur 34 pour déterminer la période pendant laquelle la sortie 10m fournit au dispositif 33 d'avis d'appel le signal d'avis d'appel.

Le circuit d'enregistrement 8 est couplé par une entrée 8a à l'entrée 7b du dispositif 7 de commande de télécopie, et ce dispositif d'enregistrement enregistre un message vocal analogique reçu en réponse à une instruction de démarrage d'enregistrement fourni par le dispositif de commande 10 sur une sortie 10n, cette instruction étant appliquée à une entrée 8b du dispositif d'enregistrement 8. Ce dernier peut comprendre un enregistreur tel qu'un enregistreur à bandes ou un autre milieu d'enregistrement magnétique où il peut, à titre de variante, être constitué par un codeur et une mémoire à accès direct ou un autre milieu d'enregistrement approprié.

Le générateur de messages 9 est couplé par une sortie 9a à la sortie 7d du dispositif 7 de commande de télécopie. Un message vocal est engendré et fournit à la sortie 9a pour informer un correspondant que l'utilisateur de l'appareil de télécommunication est absent, en réponse à un signal d'envoi de message présent à une entrée 9b et provenant d'une sortie 10o du dispositif de commande 10.

Ce dernier assure l'ensemble des commande de l'appareil de télécommunication et peut être formé par un micro-ordinateur, comprenant d'une façon connue en soi, un microprocesseur, une mémoire à accès direct pour l'emmagasinage de données variables, une mémoire morte pour l'emmagasinage d'instructions de fonctionnement et des entrées/sorties comme des bus de commandes, de données et d'adresses. Les compteurs 31 et 33, l'enregistreur 8, le générateur de messages 9, les entrées/sorties 10a à 10o et les instructions pour le fonctionnement de l'appareil de communication, peuvent être mis en oeuvre sous la forme d'un micro-ordinateur, bien que les spécialistes dans la présente technique comprendront que d'autres circuits y compris des éléments câblés discrets, peuvent également être utilisés.

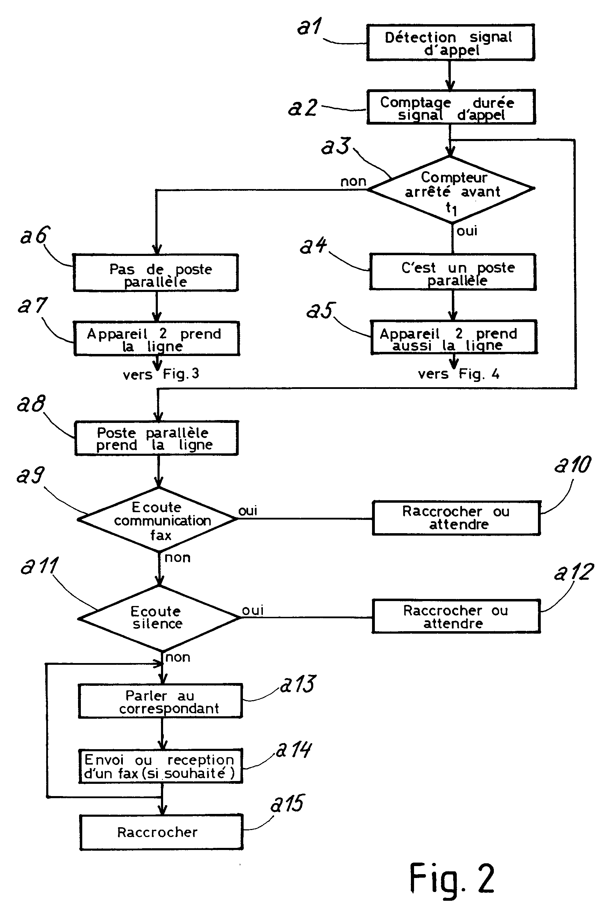

En se référant maintenant aux figures 2 à 4, on va maintenant décrire le fonctionnement de l'appareil de télécommunication 1 tel que représenté à la figure 1.

A l'état de veille, dans lequel aucune télécommunication n'est établie entre l'appareil de télécommunication 1 et un autre dispositif téléphonique ou de photocopie, et dans lequel aucun signal d'appel n'est présent sur la ligne téléphonique 12, le combiné téléphonique du poste 3 est raccroché de sorte que le commutateur de combiné 3.4 reste ouvert comme représenté à la figure 1. Les contacts 24.1 à 27.1 des éléments de commutation 24 à 27 sont ouverts de sorte que ni le poste téléphonique 3 ni le dispositif télécopieur 2 ne sont branchés pour pouvoir être connectés à la ligne téléphonique 12, bien que dans une autre mode de réalisation de l'appareil de télécommunication 1, il puisse être souhaitable qui ces deux dispositifs ou seulement l'un d'entre eux soient branchés de manière à pouvoir être reliés à la ligne à l'état de veille.

Lorsque, à l'état de veille, un signal d'appel est détecté par le détecteur d'appel 20 à l'étape a1 de la figure 2, un signal de détection d'appel est envoyé de la sortie 20a de ce détecteur vers l'entrée 10k du dispositif de commande 10. Le compteur 32 est alors commandé par le dispositif de commande 10 et, à l'étape a2 commence le comptage de la durée du signal d'appel détecté sur la ligne téléphonique 12.

Une valeur t1 correspondant à une période de temps prédéterminée est mémorisée dans la mémoire morte du dispositif de commande 10 et lorsque le détecteur d'appel 20 ne détecte plus la présence d'un signal d'appel sur la ligne téléphonique 12, le dispositif 10 compare, à l'étape a3, cette valeur mémorisée t1 avec la valeur emmagasinée dans le compteur 32 à cet instant. Si la valeur de compteur 32 est inférieure à la valeur temporelle t1 emmagasinée, le dispositif de commande 10 admet, à l'étape a4, qu'un dispositif téléphonique ou de télécopie est couplé à la ligne téléphonique 12 à la manière du poste téléphonique 11 représenté à la figure 1. A l'étape a5, fournit un signal d'un niveau élevé par sa sortie 10a au circuit 22 de commande de commutation ce qui provoque la conduction du transistor de commutation 21.1 qui relie l'appareil de télécommunication 1 à la ligne téléphonique 12. Cette situation sera expliquée plus en détail ci-après.

Toutefois, si le dispositif de commande 10 détermine que le signal d'appel est toujours présent sur la ligne téléphonique 12 après l'écoulement de la période minimale mémorisée, il admet, à l'étape a6, qu'aucun dispositif téléphonique ou de télécopie est relié en parallèle à l'appareil de télécommunication 1 à la ligne téléphonique 12, et que cet appareil 1 est connecté à la ligne 12 comme décrit ci-dessus.

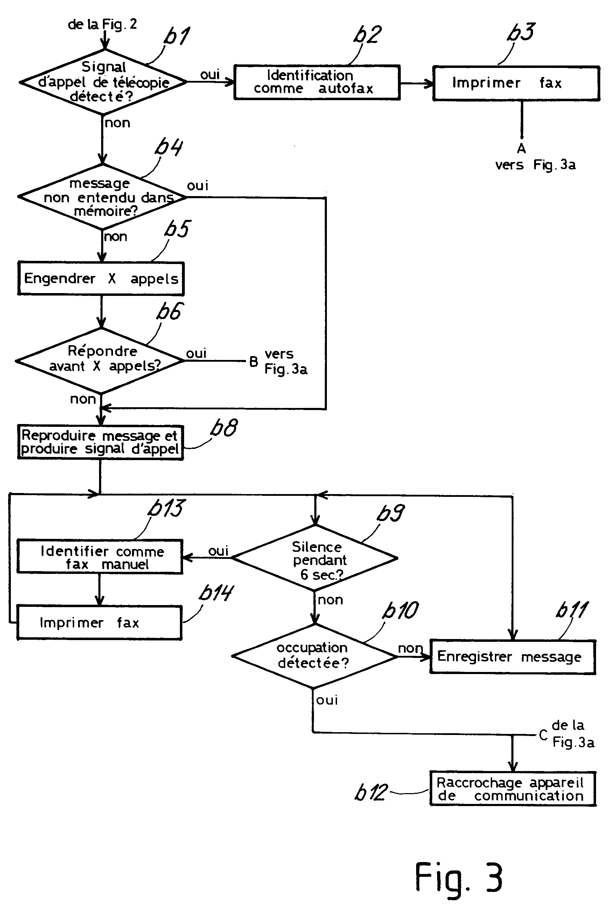

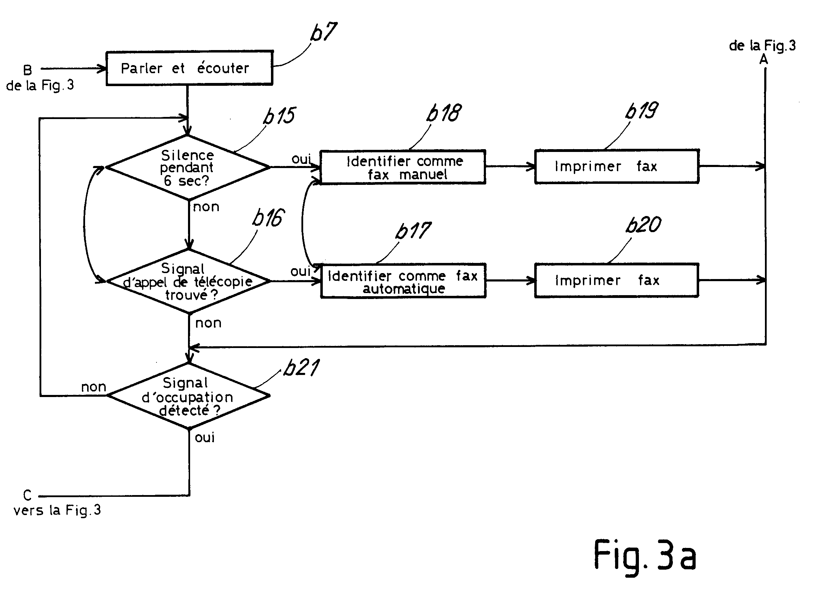

Dans ces conditions, le dispositif de commande 10 envoie également un signal de commande, par sa sortie 10e à l'élément de commutation 27 pour permettre la fermeture du contact 27.1 et pour brancher le dispositif 7 de commande de télécopie, le détecteur 28 de signal d'appel de télécopie, le détecteur de silence 29 et le détecteur 30 d'occupation, à la ligne téléphonique 12. Lorsque le commutateur de connexion 21 est fermé, ces détecteurs 28, 29 et 30 commencent à surveiller la ligne téléphonique 12. Lorsqu'un signal d'appel de télécopie est détecté, à l'étape b1 de la figure 3, le dispositif de commande 10 détermine, à l'étape b2, qu'un message de télécopie va suivre et il envoie alors une instruction de démarrage de télécopie par sa sortie 10i à l'entrée 7a du dispositif 7 de commande de télécopie pour permettre à celui-ci d'envoyer des signaux d'images reçus à son entrée 7b vers l'entrée/sortie 2a du dispositif de télécopie 2 à des fins d'impression, à l'étape b3.

Si aucun signal d'appel de télécopie n'est détecté à l'étape b1, le dispositif de commande 10 vérifie, à l'étape b4, si des messages sont mémorisés dans le dispositif d'enregistrement 8 qui n'ont pas été reproduits par l'utilisateur de l'appareil de télécommunication 1. Si de tels messages existent, le dispositif de commande 10 admet que l'utilisateur est absent et, à l'étape b8, envoie un signal de commande provenant de la sortie 10d vers l'élément de commutation 26 afin de fermer le contact 26.1. Le dispositif de commande 10 envoie alors un signal d'émission de message provenant de la sortie 10o au générateur de messages 9 qui émet un message et appelle le correspondant par l'intermédiaire de la ligne téléphonique 12.

Si, à l'étape b4, aucun message non entendu est trouvé dans le dispositif d'enregistrement 8, le dispositif de commande 10 envoie, à l'étape b5, un signal d'appel provenant de sa sortie 10m, vers le dispositif 33 d'avis d'appel, pour permettre l'annonce de la réception d'un signal d'appel destiné à l'utilisateur de l'appareil de communication 1.

A l'étape b6, une comparaison est réalisée entre la valeur présente dans le compteur 34 et une valeur prédéterminée t3 mémorisée dans la mémoire morte du dispositif de commande 10. Si, avant que le temps t3 mémorisé ne se soit écoulé, le dispositif de commande 10 détecte que le combiné du poste téléphonique 3 est soulevé, provoquant la fermeture de l'interrupteur de combiné 3.4, le poste téléphonique 3 est branché sur la ligne téléphonique 12. Ainsi, à l'étape b7, le dispositif de commande 10 envoie un signal de commande sur chacune de ses sorties 10b et 10c, en direction des éléments de commutation 24 et 25 pour provoquer la fermeture des contacts 24.1 et 25.1, permettant ainsi à l'utilisateur de l'appareil de télécommunication 1 d'émettre ou de recevoir des messages vocaux par l'intermédiaire de l'écouteur 3.3 et du microphone 3.2 respectivement.

Si le combiné du poste téléphonique 3 n'est pas soulevé de son support de sorte que l'interrupteur de combiné 3.4 reste ouvert après une période de temps t3 prédéterminée, le dispositif de commande assume de nouveau, à l'étape b8, que l'utilisateur de l'appareil de télécommunication 1 est absent et il envoie alors un signal d'envoi de message provenant de la sortie 10a vers le générateur de messages 9, comme expliqué ci-dessus.

Si le détecteur de silence 29 n'indique pas qu'une période de temps prédéterminée t2 de silence est détectée à l'étape b9, et que le détecteur d'occupation 30 ne détecte aucun signal d'occupation sur la ligne téléphonique 12, le dispositif de commande 10 envoie, à l'étape b11, une instruction de démarrage d'enregistrement par sa sortie 10a, vers le dispositif d'enregistrement 8 et le message vocal envoyé par le correspondant est enregistré pour une écoute ultérieure par l'utilisateur de l'appareil de télécommunication 1. Les étapes b9 à b11 sont répétées jusqu'à ce que soit la période t2 prédéterminée de silence est détectée, soit qu'un signal d'occupation est détecté indiquant que le correspondant a raccroché et déconnecté son poste téléphonique ou son dispositif de télécopie de la ligne téléphonique 12. Dans ce dernier cas, le dispositif de commande 10 envoie, à l'étape b12, un signal de faible niveau par sa sortie 10a, vers le circuit de commande de commutation 22 afin que le transistor de commutation 21.1 cesse de conduire et déconnecte l'appareil de télécommunication 1 de la ligne téléphonique 12. Ensuite, le dispositif de commande 10 remet l'appareil de communication 1 dans l'état de veille afin qu'il puisse recevoir un nouveau signal d'appel.

Si, par contre, une période de silence est détectée à l'étape b9, supérieure au temps prédéterminé t2 mémorisée dans la mémoire morte du dispositif de commande 10, tout signal suivant est interprété à l'étape b13 par le dispositif de commande 10 comme faisant partie d'un message de télécopie et mis manuellement (aucun signal d'appel de télécopie n'est transmis). A l'étape b14, le message de télécopie ainsi reçu est imprimé et un signal de fin de télécommunication de télécopie est envoyé par le dispositif 7 de commande de télécopie à partir de son entrée/sortie 7a, vers le dispositif de commande 10. En revenant maintenant à l'étape b6, si le combiné du poste téléphonique 3 était soulevé de son support et l'interrupteur de combiné 3.4 fermé avant l'écoulement de la période mémorisée t3, le dispositif de commande 10 envoie un signal de commande à partir de ses sorties 10b et 10c vers les éléments de commutation 24 et 25 pour fermer les contacts 24.1 et 25.1 ce qui permet à l'utilisateur d'émettre et de recevoir des messages vocaux en utilisant le poste téléphonique 3. Le combiné téléphonique restant décroché, la détection soit d'un signal d'appel de télécopie par le détecteur 28 à l'étape b15, soit la détection d'une période de silence d'une longueur supérieure au temps t3 (comme à l'étape b9) par le détecteur de silence 29 à l'étape b16, identifie respectivement le message comme étant un message de télécopie transmis automatiquement, à l'étape b17 ou comme étant un facsimile transmis manuellement à l'étape b18. Le message de télécopie ainsi identifié est imprimé aux étapes b19 et b20.

Après l'émission et l'impression de message de télécopie par le dispositif télécopieur 2, l'utilisateur peut continuer à utiliser le poste téléphonique 3 pour envoyer et recevoir des messages vocaux par l'intermédiaire de la ligne téléphonique 12 ou à recevoir et à émettre des message de télécopie en utilisant le dispositif télécopieur 2 dans déconnecter l'appareil de communication 1 de la ligne téléphonique 12 jusqu'à ce qu'un signal d'occupation est détecté, à l'étape b21, indiquant que le correspondant a raccroché. Le dispositif de commande 10 déconnecte alors l'appareil de communication 1 de la ligne téléphonique 12 à l'étape b12 comme décrit ci-dessus.

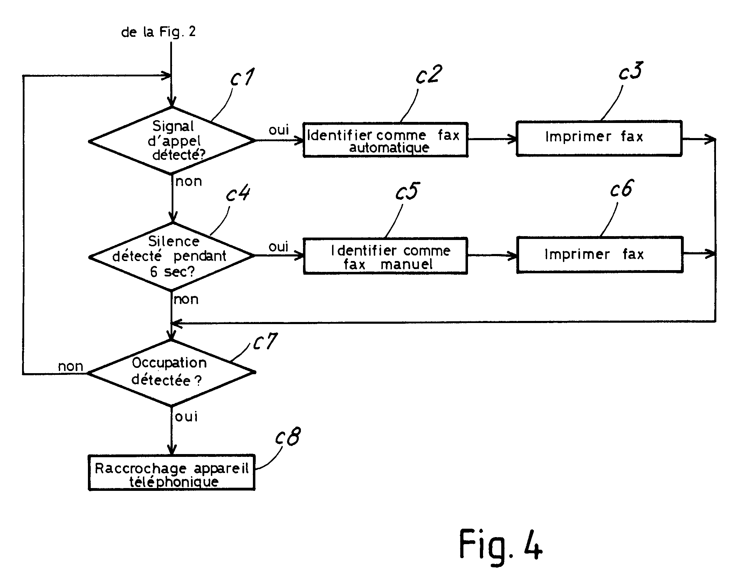

En se référant maintenant aux figures 2 et 4, lorsque le poste téléphonique 11 couplé séparément à la ligne téléphonique 12 par rapport à l'appareil de télécommunication 1, est utilisé pour répondre à un signal d'appel sur la ligne téléphonique 12, la connexion de ce poste séparé 11 provoque l'arrêt de la transmission des signaux d'appel par le central téléphonique. Comme décrit ci-dessus, lorsque la détection par le détecteur d'appel 20 de ces signaux d'appel cesse, avant qu'une période de temps prédéterminée t1 se soit passée, le dispositif de commande 10 admet que le poste téléphonique 11 a été connecté à la ligne téléphonique 12, conformément à l'étape a8, et relie également l'appareil de télécommunication 1 à la ligne téléphonique 12 conformément à l'étape a5.

Le dispositif de commande 10 envoie un signal de commande sur sa sortie 10e vers l'élément de commutation 27 pour fermer le contact 27.1 de celui-ci et permettre la surveillance par l'appareil de télécommunication 1 de la ligne téléphonique 12 par l'intermédiaire du détecteur 28, du détecteur de silence 29 et du détecteur d'occupation 30. Si un signal d'envoi de télécopie est détecté à l'étape C1, (figure 4) identifiant un message de facsimile émis automatiquement à l'étape c2, le dispositif de commande d'appel 10 envoie une instruction de démarrage de télécopie par son entrée/sortie 10i vers le dispositif de commande de télécopie 7. Les signaux de télécopie reçus à l'entrée 7b de ce dispositif de commande 7 sont ensuite envoyés vers des dispositifs de télécopie 2 pour que l'on puisse imprimer à l'étape c3.

De même, si une période de silence est détectée supérieure au temps prédéterminé t2 mémorisé dans la mémoire morte du dispositif de commande 10 à l'étape c4, les signaux suivants provenant de la ligne téléphonique 12 sont identifiés comme étant une partie d'un message de télécopie transmis manuellement à l'étape c5. Le dispositif de commande 10 envoie alors une instruction de démarrage de télécopie vers le dispositif 7 de commande de télécopie pour lui permettre d'envoyer les signaux de télécopie reçus vers le dispositif télécopieur 2 pour que l'impression puisse avoir lieu à l'étape c6.

Lorsque l'impression du message de télécopie est achevée, un signal de fin de communication de télécopie est envoyé par le dispositif 7 de commande de télécopie vers le dispositif de commande 10 pour que les signaux présents sur la ligne téléphonique 12 ne soient plus longtemps envoyés par ce dispositif de commande de télécopie 7 vers le dispositif télécopieur 2. Toutefois, les sorties 10a et 10e du dispositif de commande 10 restent dans l'état dans lequel l'appareil de télécommunication 1 reste connecté à la ligne téléphonique 12. Par suite, un utilisateur peut continuer à utiliser le poste téléphonique 11 après transmission d'un message de télécopie pour envoyer et recevoir des signaux vocaux; dans ce cas, l'appareil de télécommunication 1 reste connecté à la ligne téléphonique 12 et continue donc à surveiller celle-ci en ce qui concerne la réception d'un signal d'appel de télécopie au une période de silence supérieure à la valeur mémorisée t2. Si un nouveau signal d'appel de télécopie ou une nouvelle période de silence supérieure à la valeur t2 est détecté, le dispositif de commande 10 envoie de nouveau une instruction de démarrage de télécopie vers le dispositif 7 de commande de télécopie et le message de télécopie est imprimé par le dispositif télécopieur 2. De cette manière, l'utilisateur peut soit utiliser la réception/émission de messages de télécopie sur l'appareil de télécommunication 1, soit la réception/émission de messages vocaux sur le poste téléphonique distinct 11 même si le signal d'appel a été déjà répondu en utilisant le poste téléphonique distinct 11.

Par conséquent, en se référant de nouveau à la figure 1, lorsqu'un utilisateur répond à un signal d'appel entrant sur la ligne téléphonique 12 en utilisant le poste téléphonique distinct 11 à l'étape a8, il peut entendre un message de télécopie émis vers l'appareil de communication 1 à l'étape a9. Alors, à l'étape a10 il peut raccrocher et déconnecter le poste téléphonique 11 de la ligne 12 ou attendre jusqu'à ce que la communication de télécopie soit achevée et conduire la conversation téléphonique. De la même façon, s'il entend une période de silence à l'étape a11 lorsqu'il permet la connexion du poste téléphonique 11 à la ligne 12, il peut, à l'étape 12, raccrocher ou attendre jusqu'à ce que la télécommunication de télécopie soit achevée et conduire une conversation téléphonique. Dans ce dernier cas, il doit rester silencieux ou couper le microphone du combiné de sorte qu'une période de silence identifiant un message de télécopie transmis manuellement peut être reçu de façon adéquate par l'appareil de communication 1.

A l'étape a13, l'utilisateur peut recevoir et émettre des messages vocaux par l'intermédiaire de la ligne téléphonique 12 à la suite de quoi il peut envoyer ou recevoir un message de télécopie à l'étape a14 sur le dispositif télécopieur 2 car l'appareil de télécommunication est également relié à la ligne téléphonique 12.

Les étapes c1 et c4 sont répétées jusqu'à ce que l'utilisateur débranche le poste téléphonique 11 à l'étape a15. Lorsque le dispositif de télécommunication 1 détecte un signal d'occupation sur la ligne téléphonique 12, il est déconnecté de celle-ci à l'étape c8 et retourne vers l'état de veille.

Enfin, il est bien entendu que diverses modifications variantes et/ou additions peuvent être faites à l'appareil de télécommunication sans sortir du cadre de la présente invention.

## Revendications

1. Appareil de télécommunication destiné à être utilisé avec un poste téléphonique distinct (11) pouvant être connecté à une ligne de télécommunication (12), cet appareil comprenant
des moyens de télécommunication (2) destinés à recevoir et à émettre un signal d'image sur ladite ligne de télécommunication (12),
un dispositif de détection d'appels (20) raccordé entre ladite ligne de télécommunication (12) et lesdits moyens de télécommunication (2) pour détecter un signal d'appel sur ladite ligne de télécommunication (12),
un commutateur de connexion (21) destiné à connecter l'appareil de télécommunication à ladite ligne de télécommunication (12) afin de permettre d'établir des télécommunications entre ces moyens de télécommunication (2) et cette ligne de télécommunication (12),
des moyens d'identification de signal (6) destinés à détecter un signal d'identification d'image porté par ladite ligne de télécommunication (12), ledit signal d'identification d'image précédant le signal d'image, et des moyens de commande (10) pour permettre audit signal d'image d'être reçu par lesdits moyens de télécommunication (2) à la détection d'un signal d'identification d'image,
ledit appareil de télécommunication étant caractérisé en ce qu'il comprend également des moyens (20,32) pour détecter la connexion du poste téléphonique distinct (11) à ladite ligne de télécommunication (12) en réponse audit signal d'appel de telle façon qu'à la suite de la détection de cette connexion, ledit commutateur de connexion (21) soit amené à se fermer et à permettre ainsi auxdits moyens d'identification de signal (6) de surveiller la ligne de télécommunication (12) en ce qui concerne l'apparition du signal d'identification d'image sans déconnecter le poste téléphonique distinct (11) de la ligne de télécommunication (12).

2. Appareil de télécommunication suivant la revendication 1, caractérisé en ce que lesdits moyens (20,32) destinés à détecter la connexion du poste téléphonique distinct (11)
téléphonique (12) comprend un compteur (32) signal d'appel destiné à mesurer la durée de ce signal et des moyens de comparaison (10) pour comparer la durée de ce signal d'appel à une période de temps prédéterminée mémorisée t1, ledit commutateur de connexion (21) étant amené à relier après une télécommunication à ladite ligne de télécommunication (12) lorsque la durée du signal d'appel est inférieure à la période de temps prédéterminée mémorisée (t1).

3. Appareil de télécommunication selon la revendication 2, caractérisé en ce qu'il comprend également un dispositif d'avis d'appel (33) destiné à aviser de la détection d'un signal d'appel par un détecteur d'appel (20) de manière que ledit signal d'appel détecté ne soit pas annoncé par le dispositif d'avis d'appel (33) à moins que la durée du signal d'appel soit supérieure à ladite période de temps prédéterminée mémorisée (t1).

4. Appareil de télécommunication selon la revendication 3, caractérisé en ce que ledit commutateur de connexion (21) est fermé pour relié l'appareil de télécommunication à ladite ligne de télécommunication (2) lorsque la durée dudit signal d'appel est supérieure à ladite période de temps prédéterminée mémorisée (t1).

5. Appareil de télécommunication suivant l'une quelconque des revendications précédentes, caractérisé en ce que lesdits moyens d'identification de signal (6) comprennent un détecteur de signal d'appel de télécopie (28) destiné à détecter un signal d'appel de télécopie sur ladite ligne de télécommunication (12).

6. Appareil de télécommunication suivant l'une quelconque des revendications précédentes, caractérisé en ce que ledit dispositif d'identification du signal (6) comprend un détecteur de silence (29) destiné à détecter l'absence de signaux vocaux et de signaux d'images sur ladite ligne de télécommunication (12) pendant une période de temps prédéterminée (t2).

7. Appareil de télécommunication selon la revendication 6, caractérisé en ce que ladite période de temps prédéterminée (t2) est d'au moins 6 secondes.

8. Appareil de télécommunications suivant l'une quelconque des revendications précédentes, caractérisé en ce qu'il comprend également un détecteur de signaux d'occupation (30) destinés à détecter un signal d'occupation sur ladite ligne de télécommunication (12), ledit commutateur de connexion (21) étant amené à s'ouvrir pour déconnecter ledit appareil de télécommunication de la ligne de télécommunication (12) lorsqu'un signal d'occupation est détecté.

9. Appareil de télécommunication suivant l'une quelconque des revendications précédentes, caractérisé en ce qu'il comprend également un poste téléphonique dédicacé (3) destiné à recevoir et à émettre un signal local sur ladite ligne de télécommunication, et des moyens de commutation (5) destinés à commuter le poste téléphonique dédicacés (3) et le dispositif de télécommunication (2) à la ligne de télécommunication (12).

10. Appareil de télécommunication selon la revendication 9, caractérisé en ce qu'il comprend également un dispositif d'enregistrement (8) pour enregistrer les signaux vocaux reçus pour une écoute ultérieure.

11. Appareil de télécommunication suivant l'une quelconque des revendications précédentes, caractérisé en ce qu'il comprend un dispositif de télécopie.
